# EUROPEAN PATENT APPLICATION

(11) **EP 4 714 891 A1**
(43) Date of publication of application: **25.03.2026**
(21) Application number: 24201366.2
(22) Date of filing: 19.09.2024
(51) Int. Cl.: B66F 9/06, B66F 17/00, G06Q 10/08, B66F 9/075

(54) **A WIRELESS SERVER UNIT FOR USE IN A WAREHOUSE**

(71) Applicant: Toyota Material Handling Manufacturing Sweden AB, 595 81 MJÖLBY (SE)
(72) Inventor: KHUDAIR, Haider, 602 34 Norrköping (SE); NILSSON, Anders, 582 43 Linköping (SE)
(74) Representative: Zacco Sweden AB

(57) **Abstract**

The disclosure relates to a wireless server unit (30) for use in a warehouse (1), wherein the wireless server unit is configured to; receive a vehicle signal (101) from a material handling vehicle (10), said vehicle signal indicating a current or a desired position of the vehicle relative to at least one aisle (20), process the vehicle signal (101) to generate an aisle status data (301) based on the vehicle signal (101), transmit the aisle status data (301) to the at least one material handling vehicle (10), wherein the aisle status data (301) indicate whether the material handling vehicle is granted or declined access to enter the aisle (20). The disclosure further relates to a material handling vehicle (10) for communicating with a wireless server unit (30) and a remote aisle access system for controlling access to material handling vehicles in a warehouse.

## Description

### Technical field

The present disclosure relates to a wireless server unit for use in a warehouse, a material handling vehicle for communicating with a wireless server unit and a remote aisle access system for controlling access to material handling vehicles in a warehouse. More specifically, the disclosure relates to a wireless server unit, such as managing access and movement of material handling vehicles within aisles. The disclosure further relates to material handling vehicle for communicating with the wireless server unit and the remote aisle access system for controlling access to material handling vehicles using the wireless server unit, as defined in the introductory parts of the independent claims.

### Background

Material handling vehicles, including forklifts, automated guided vehicles and other types of warehouse transport equipment, play a crucial role in the efficient operation of warehouses and distribution centers. These vehicles are responsible for the transport, storage, and retrieval of goods, ensuring that products move smoothly from one location to another within a facility. The seamless operation of these vehicles is essential for maintaining the productivity and safety of the warehouse environment.

In the operation of material handling vehicles inside a warehouse, it is common for several vehicles to move simultaneously on the warehouse floor. Typically, operators monitor their surroundings and vehicle movements through visual detection. By doing so, they can detect nearby vehicles and adjust their speed and position accordingly to avoid collisions and ensure smooth operation. However, this reliance on visual monitoring presents several challenges, especially in busy and often congested warehouse spaces where visibility can be limited. The operator is most often situated on the vehicle but can also operate the vehicle remote.

A challenge faced in warehouse operations is the coordination and visibility of material handling vehicles. In busy and congested warehouse spaces, it can be difficult for operators to see other vehicles and anticipate their movements. This lack of visibility and communication between vehicles can lead to collisions and unexpected stops. Such incidents not only pose a risk of injury to personnel but also disrupt the workflow, reducing the overall efficiency of the warehouse operations.

There are currently several solutions that address these challenges in different ways. The simplest methods are to include the use of mirrors, warning lights, and audible alarms to enhance visibility and alert operators of approaching vehicles. Warehouses have implemented traffic management systems that control the movement of vehicles through designated pathways and intersections. These systems often rely on a combination of signage, floor markings, and physical barriers to guide vehicle operators safely through the warehouse.

More advanced solutions involve the use of technology, such as radio frequency identification (RFID) systems, GPS tracking, and collision avoidance systems. These technologies enable vehicles to communicate their positions and movements to each other, providing operators with information about the location and trajectory of other vehicles. For instance, collision avoidance systems can use sensors to detect potential collisions and automatically slow down or stop a vehicle to prevent an accident when coming too close to one another.

There are systems using combinations of laser scanners and cameras to provide a comprehensive view of the vehicle's surroundings. There are also systems that use control systems which communicate with all material handling vehicles within a warehouse and coordinate the movements of vehicles to prevent collisions and optimize traffic flow.

### Summary

However, these solutions face limitations in accuracy and reliability. Both in the exact positioning of the vehicle and when a vehicle can stop or continue in more complex situations. Particularly in complex and dynamic environments where the density of obstacles and vehicles is high.

Therefore, there is potential for further improvements in the field of material handling vehicle systems, particularly in enhancing the accuracy and reliability of collision avoidance and traffic management technologies.

There is thus a need to develop an improved material handling vehicle system that enhances the coordination, visibility, and safety of vehicles operating in warehouse environments.

It is an object of the present disclosure to mitigate, alleviate, or eliminate the above-identified deficiencies and disadvantages in the prior art and solve at least the above-mentioned problem.

An object of the present invention is thus to achieve an advanced material handling vehicle system that improves the accuracy and reliability of vehicle navigation, collision avoidance, and traffic management in complex and dynamic warehouse settings.

Hence, according to a first aspect there is provided a wireless server unit for use in a warehouse, wherein the wireless server unit is configured to receive a vehicle signal from a material handling vehicle, where the vehicle signal indicating a current or a desired position of the vehicle relative to at least one aisle. Process the vehicle signal to generate aisle status data based on the vehicle signal. Further transmitting the aisle status data to the at least one material handling vehicle, wherein the aisle status data indicates whether the material handling vehicle is granted or declined access to enter the aisle.

The present disclosure offers several advantages through the use of a wireless server unit within warehouse. One benefit is the improved safety and coordination of material handling vehicles operating within a warehouse. By allowing each vehicle to communicate its current or desired position to the wireless server unit, it ensures a more controlled and predictable movement of vehicles. This communication capability allows the server unit to monitor the positions of all vehicles in real time, reducing the likelihood of collisions and congestion in the aisles.

Additionally, the ability of the wireless server unit to process vehicle signals and generate aisle status data is crucial for efficient warehouse operations. The aisle status data, which indicates whether a vehicle is granted or declined access to enter a specific aisle, provides a systematic approach to managing vehicle traffic. This feature is particularly beneficial in preventing multiple vehicles from entering the same aisle simultaneously, which can lead to accidents or blockages. By granting or denying access based on the current status of the aisle and the positions of other vehicles, the system minimizes the risk of collisions and optimizes the flow of traffic within the warehouse.

Furthermore, the use of a wireless server unit enhances the reliability in a warehouse. Because vehicles are required to communicate their positions to the server before receiving permission to enter an aisle, there is a higher level of control and oversight over vehicle movements. This process helps to ensure that vehicles only enter aisles when it is safe to do so, reducing the chances of accidents and improving overall operational efficiency. As a result, warehouse operations become more streamlined, with a focus on safety and coordination, ultimately leading to increased productivity and reduced downtime due to accidents or traffic congestion.

According to some embodiments, the aisle status data can indicate a restricted grant of aisle access based on the vehicle signal data. This means wireless server unit can provide conditional access to aisles, allowing vehicles to enter under specific circumstances or with certain limitations. For instance, a vehicle may be granted access to an aisle but with a reduced speed limit or a requirement to stop if another vehicle is operating within a certain proximity or occupying the whole aisle. This feature ensures that even when multiple vehicles need access to the same aisle, their movements can be controlled and coordinated to prevent congestion and accidents. If a vehicle approaches an aisle that is restricted or currently occupied, the wireless server unit can signal the vehicle to adjust its route by suggesting alternative paths. This capability reduces interruptions allowing vehicles to perform tasks efficiently without being hindered by traffic or without the risk of collision.

Additionally, according to some embodiments the wireless server unit is configured to communicate with at least two material handling vehicles, and the vehicle signal includes at least one of an aisle ID and/or material handling vehicle position data. The aisle ID provides indication data on whether an aisle is currently occupied or free, enabling availability of each aisle in real time. The material handling vehicle position data indicates where the vehicle is located inside the aisle, allowing for precise tracking of vehicle movements. By combining these data points, the wireless server unit can make more informed decisions about granting access to vehicles based on the current occupancy status of aisles and the exact positions of other vehicles.

For example, if a vehicle sends a signal indicating that it is approaching an occupied aisle, the wireless server unit can use the aisle ID to determine that the aisle is not immediately available and can either deny access or suggest an alternative route. Additionally, if the vehicle position data shows that the vehicle is already within an aisle but nearing a congested area, the wireless server unit could proactively manage the situation by issuing instructions to adjust the vehicle's speed, pause movement, or even backtrack to avoid a potential blockage.

By utilizing aisle ID and vehicle position data, the wireless server unit enhances its ability to manage traffic flow dynamically, ensuring that vehicles are only granted access when it is safe and efficient to do so. This approach not only prevents collisions and reduces waiting times but also allows for a more efficient allocation of warehouse space and resources. As a result, vehicles can complete their tasks more quickly, and the overall workflow of the warehouse is optimized.

According to some embodiments, the wireless server unit is configured to establish a stop zone within the at least one aisle. A designated area where the vehicle signal prohibits vehicle entry unless conditional access is permitted. This feature enhances safety and traffic management by controlling vehicle movements in critical areas, preventing unauthorized entry into congested or high-risk zones. By defining stop zones, the wireless server unit ensures that vehicles only proceed when it is safe and optimal, reducing the risk of collisions and ensuring smoother, more coordinated operations within the warehouse. This capability improves overall workflow efficiency and enhances the safety of both personnel and equipment.

A stop zone could be strategically defined based on various factors, including the specific layout of the warehouse, the nature of the operations, and the movement patterns of material handling vehicles. In one example a stop zone could be an area near the entrance of an aisle where vehicles must pause to ensure that no other vehicles or obstacles are blocking their path. This pause allows for a thorough check of the aisle's status, reducing the risk of collisions as vehicles enter or exit the aisle. In this scenario, vehicles would be prohibited from entering the stop zone unless they receive conditional access based on real-time data from the wireless server unit. This conditional access could be influenced by factors such as current aisle occupancy, the position of other vehicles, or operational priorities.

The stop zone could be defined as the area where a vehicle is currently positioned within the aisle, effectively creating a region that other vehicles are restricted from entering without conditional access. In such a situation, if another vehicle is approaching the aisle, the wireless server unit can grant restricted access to the incoming vehicle. Instead of completely prohibiting entry into the aisle, the server unit allows the incoming vehicle to use the portion of the aisle that is not currently occupied by the vehicle already situated there. This arrangement ensures that the incoming vehicle can navigate safely within the available space while avoiding direct interference with the vehicle occupying the stop zone.

For example, if a vehicle is positioned at one end of the aisle, the stop zone would cover that section of the aisle. The wireless server unit can then allow the approaching vehicle to enter the aisle but restrict its access to the segment that remains free, thereby preventing it from encroaching upon the space occupied by the stationary vehicle. This approach maximizes the utilization of the aisle's space, allowing the incoming vehicle to operate within the unoccupied part of the aisle safely and efficiently. By defining and managing stop zones in this manner, the wireless server unit ensures that vehicle movements within the aisle are coordinated and controlled, even when multiple vehicles are present.

Another potential stop zone could be a section within an aisle where high-value or sensitive items are stored. This area might be designated as a stop zone to ensure that vehicles operate with extra caution, thereby minimizing the risk of damage to valuable goods. In such cases, the stop zone might require additional clearance or special handling procedures before a vehicle can proceed, ensuring that the operational integrity and safety of the stored items are maintained. Additionally, a stop zones could be established in areas where temporary obstructions or maintenance activities are occurring. By defining these zones, the wireless server unit can automatically prevent vehicles from entering potentially hazardous areas, thereby avoiding accidents and ensuring that maintenance work can be conducted without interference. Vehicles would need to receive specific authorization to enter these zones, which would be managed through the wireless server unit based on the real-time status and conditions within the warehouse.

In some embodiments, the stop zone is activated when the aisle is occupied by a vehicle. This feature allows an incoming vehicle to enter the aisle with restricted access, enabling it to use the portion of the aisle that remains unoccupied. By doing so, the wireless server unit ensures that the incoming vehicle can safely navigate within the available space without interfering with the vehicle already in the aisle. This approach maintains efficient use of aisle space and enhances safety by managing vehicle movements even when the aisle is partially occupied.

According to some embodiments, the stop zone is activated within a predetermined distance around the vehicle, preferably the predetermined distance is arranged to be one to two total lengths of the vehicle, preferably the predetermined distance is defined as a circle around the vehicle centre. This means that when a vehicle is positioned in an aisle, the stop zone extends a specified radius around it, restricting entry into this area to prevent potential conflicts. Incoming vehicles can access the aisle but are limited to the portion of the aisle outside the stop zone. This setup ensures that the approaching vehicle navigates safely without encroaching on the space occupied by the stationary vehicle, optimizing aisle usage and enhancing overall safety.

According to some embodiments, the wireless server unit is further integrated with an order management system. This integration allows the server unit to access order management data related to the current or desired positions and tasks of the vehicles. By incorporating this data into the aisle status data, the wireless server unit can coordinate vehicle movements more effectively based on real-time operational needs and priorities. The feature offers advantages as it enables a more responsive approach to managing vehicle traffic within the warehouse. The wireless server unit can prioritize access for certain vehicles or navigating high-priority routes, enhancing overall efficiency and productivity. By integrating the wireless server unit with the order management system, it has a better insight of the operational context and priorities of each vehicle. This may allow the wireless server unit not only to grant or deny access to certain aisles based on the vehicle's task but also to stop or even suggest alternative routes when a direct path is unavailable or congested.

For example, if a vehicle carrying prioritised goods is approaching an aisle that is already occupied or temporarily restricted, the wireless server unit can identify and communicate a different, less congested route to the vehicle. This capability minimizes delays and ensures that critical tasks are completed as quickly as possible, without waiting for access to a blocked aisle. Similarly, if multiple vehicles are converging on the same aisle, the wireless server unit can dynamically reroute one or more vehicles to alternate pathways to prevent bottlenecks and maintain a steady flow of traffic throughout the warehouse.

By offering these real-time navigation adjustments, the wireless server unit significantly reduces idle time and maximizes the use of available vehicles. Vehicles spend less time waiting and more time actively transporting goods.

Furthermore, the ability of the wireless server unit to incorporate order management data into the aisle status data improves the overall reliability. By considering both the positions and the operational priorities of multiple vehicles, the wireless server unit can make more informed decisions about granting or denying access to aisles. This reduces the potential for conflicts and delays, as vehicles are less likely to encounter unexpected obstacles or be forced to wait for access. As a result, warehouse operations can proceed more smoothly, with reduced downtime and increased throughput.

Integrating the wireless server unit with the order management system enhances the flexibility of the warehouse management where it can adapt to changing conditions and operational demands, such as shifts in order volume or adjustments in warehouse layout. By continuously updating the aisle status data with real-time information from both the vehicles and the order management system, the warehouse can better manage its resources and optimize its workflow.

Additionally, according to some embodiments, the aisle status data can indicate a restricted grant of aisle access based on a combination of the vehicle signal and the order management data. This feature ensures that even when multiple vehicles need access to the same aisle, their movements are controlled and coordinated to prevent congestion and accidents. In scenarios where multiple vehicles converge on a single aisle, the wireless server unit can evaluate the vehicle signals and order management data to determine which vehicle should be granted full access, which should have restricted access, and which should be rerouted entirely.

According to some embodiments, the activation of the stop zone is conditional on information from the order management data. This means that the stop zone's parameters and restrictions are dynamically adjusted based on real-time data about the current orders and vehicle activities. For instance, the wireless server unit may modify the stop zone size or its location depending on the priority and status of ongoing tasks within the warehouse as previously described.

According to the second aspect of the disclosure, a material handling vehicle is designed to communicate with the wireless server unit described in the first aspect. This material handling vehicle includes a position controller equipped with several key components that enhance operational efficiency and safety within a warehouse environment.

The position controller features a detection means that is specifically configured to detect an aisle access unit, which includes the aisle ID. This allows the vehicle to identify the current status of the aisle it is approaching or within, providing real-time information about the availability and occupancy of the aisle. The aisle ID helps determine whether the aisle is occupied or free, which is critical for making informed navigation decisions. The vehicle also includes a transmitting means for wirelessly transmitting the aisle ID to the wireless server unit. This functionality ensures that the server unit receives up-to-date information about the vehicle's location and the aisle it is interacting with. By transmitting this data, the vehicle contributes to the ability to manage aisle access and coordinate traffic flow based on real-time conditions.

Additionally, the vehicle is equipped with a receiving means that enables it to receive aisle status data from the wireless server unit. This data indicates whether access to the aisle is granted or declined, based on factors such as aisle occupancy and operational priorities. By receiving this information, the vehicle can adjust its actions accordingly, such as halting, proceeding cautiously, or rerouting as needed.

An advantage of this setup is that it integrates real-time communication and control between the material handling vehicle and the wireless server unit. The position controller, in conjunction with the detection, transmitting, and receiving means, allows for an active and responsive management of vehicle movements within the warehouse. The vehicle can in some cases autonomously adjust its path and speed based on the aisle status data, ensuring safe and efficient navigation even in complex and busy warehouse environments.

According to some embodiments, the material handling vehicle includes an aisle position means situated inside the aisle which provides specific positional information to the vehicle. This aisle position means is detected by the vehicle's detection means and transmitted to the wireless server unit via the vehicle's transmitting means.

The aisle position means is designed to indicate the vehicle's precise location within the aisle, allowing the wireless server unit to receive detailed information about where the vehicle is situated. This capability enhances the ability to manage and coordinate vehicle movements with greater accuracy. The advantages of integrating aisle position means are several. Firstly, it allows for precise tracking of the vehicle's location within the aisle, which helps managing traffic flow and preventing collisions. With the detailed positional data, the wireless server unit can accurately determine the vehicle's proximity to other objects or vehicles within the aisle, leading to more informed decision-making regarding aisle access. Secondly, the ability to detect and transmit a vehicle's exact position within the aisle enables more nuanced traffic management strategies. For example, if a vehicle is positioned in a critical area of the aisle, the server unit can adjust access permissions for other vehicles based on the specific location of the vehicle. This ensures that the aisle can be used efficiently and safely, even in complex scenarios where multiple vehicles are operating simultaneously.

Additionally, the precise positional information provided by the aisle position means facilitates enhanced safety and operational efficiency. Vehicles can receive real-time updates about their location relative to the aisle's layout and other vehicles, allowing for better manoeuvring and reducing the risk of accidents.

According to some embodiments, the material handling vehicle's detection means is configured to detect the aisle position means inside the aisle, allowing it to determine the vehicle's precise location. This information is then wirelessly transmitted to the wireless server unit. This capability provides advantages by enabling accurate tracking of the vehicle's position within the aisle. This precise location data increases the ability to manage traffic flow, prevent collisions, and optimize the use of aisle space, leading to improved safety and efficiency in warehouse operations.

According to some embodiments, the material handling vehicle receives a vehicle signal from the wireless server unit that indicates the stop zone. Based on this signal, the vehicle limits its movement according to the aisle status, its own position within the aisle, and data from the order management system. This integration ensures that the vehicle operates safely and efficiently by adhering to defined stop zones, avoiding congestion, and optimizing its path based on real-time conditions and operational priorities.

According to a third aspect of the disclosure a remote aisle access system is designed to manage and control access for material handling vehicles within a warehouse. This system comprises a wireless server unit, as outlined in the first aspect, at least one material handling vehicle equipped as described in the second aspect and at least one aisle, where the material handling vehicle and the wireless server unit are arranged for wireless communication.

The integration of the wireless server unit with the material handling vehicle(s) provides several advantages. First, the wireless communication between the server unit and the vehicles enables real-time data exchange, which enhances the effective management of aisle access. This real-time interaction ensures that access decisions are based on the most current information about aisle status, vehicle positions, and order management data.

The system's capability to wirelessly communicate allows the wireless server unit to continuously monitor and control the movement of material handling vehicles. By receiving and processing data from the vehicles, such as their position within the aisle and the status of the stop zones, the server unit can make informed decisions about granting or restricting access. This capability reduces the likelihood of collisions and congestion by dynamically adjusting access permissions based on real-time conditions.

The ability to wirelessly communicate also enhances operational flexibility and responsiveness. Vehicles can receive updated instructions and access permissions instantly, allowing them to adapt to changing conditions within the warehouse. For instance, if a vehicle approaches a restricted area or if a stop zone is activated, the server unit can immediately relay this information to the vehicle, ensuring that it adjusts its movements accordingly. The system can also benefit from the integration of data from the order management system.

Effects and features of the second and third aspects are to a large extent analogous to those described above in connection with the first aspect. Embodiments mentioned in relation to the first aspect are largely compatible with the second and third aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
- Figure 1: Schematically illustrates a wireless server unit for use in a warehouse;
- Figure 2: Schematically illustrates a wireless server unit for use in a warehouse to an example of the present disclosure;

- Figure 3: Schematically illustrates two examples of a wireless server unit for use in a warehouse to an example of the present disclosure;
- Figure 4: Schematically illustrates a wireless server unit for use in a warehouse to an example of the present disclosure;
- Figure 5: Schematically illustrates a wireless server unit for use in a warehouse to an example of the present disclosure;
- Figure 6: Schematically illustrates a material handling vehicle warehouse to an example of the present disclosure;
- Figure 7: Schematically illustrates a flow chart for a wireless server unit and a material handling vehicle for use in a remote aisle access system;

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

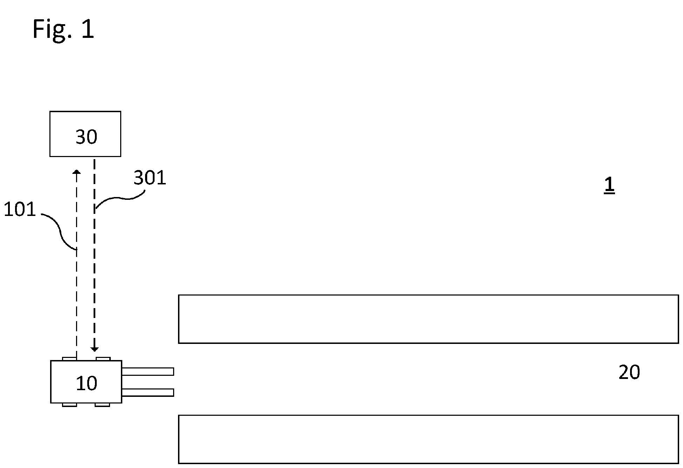

Figure 1 illustrates a first aspect of the disclosure. The figure shows a wireless server unit 30 in a warehouse 1. The wireless server unit has a design and operational strategy that optimizes the movement and positioning of vehicles like forklifts or automated guided vehicles within the warehouse aisles to improve the efficiency of loading, unloading, and transporting goods while ensuring safe navigation and maximizing storage space. The warehouse includes at least one aisle 20, typically situated between two warehouse shelfs, and at least one material handling vehicle 10. The adaptability of the wireless server unit allows it to manage various types of vehicles beyond just material handling units such as but not limited to forklifts, automated guided vehicles, and mobile robots can all be integrated into this system. The wireless server unit is configured to receive a vehicle signal 101 from the material handling vehicle 10. The vehicle signal 101 indicates a current or a desired position of the vehicle relative to the at least one aisle 20. The server unit is configured to process the vehicle signal 101 to generate an aisle status data 301 based on the vehicle signal 101 that has been collected. The processed data is then transmitted by the wireless server unit 30 to the material handling vehicle 10 indicating whether the material handling vehicle is granted or declined access to enter the aisle 20. The processed data can include various types of information essential for managing vehicle movement and access within the warehouse aisles. It could provide the current position of a material handling vehicle, allowing the system to track whether the vehicle is inside an aisle, approaching it, or moving away. The data might indicate the desired position of the vehicle, reflecting its intended path or destination within the warehouse. The processed data could also account for the status of the aisle, such as whether it is currently occupied, blocked by another vehicle, or clear for entry. Furthermore, the system might generate data on the speed and direction of the vehicle, which helps in predicting potential collisions or congestion points within the aisles. Figure 1 illustrates the minimal components required for the disclosure.

In general, a material handling vehicle is an electric vehicle that is transporting goods in a warehouse. The material handling vehicle is thus equipped with a load carrier that may lift and transport for example a pallet. Fig. 1-6 discloses a material handling vehicle 10. The vehicle comprises a drive motor, for powering the vehicle when it moves around. The vehicle 10 may also comprise a load carrier. The load carrier is in general one or several pair of forks but may also be replaced as a load carrying device, such as a clamp device or the like. The material handling vehicle further comprises a hydraulic system, powering functions of the material handling vehicle, in particular the load carriers lifting and lowering function. There is also an operator compartment with a control arrangement for operating and controlling the functions of the material handling vehicle 10.

The aisle status data 301 can further indicate a restricted grant of the aisle access to the aisle 20 dependent on the vehicle signal 101. The server can then generate aisle status data that permits entry under certain constraints, such as limited time, specific zones within the aisle, or other situational factors, which are dependent on the vehicle signal. This capability ensures a more flexible and dynamic management of aisle access to optimize traffic flow and safety in the warehouse environment.

A warehouse is to be understood as facility used for the storage of goods. It plays a crucial role in logistics, acting as a central hub where raw materials, finished products, or components are stored temporarily before being shipped to retailers, consumers, or other businesses. Warehouses are often equipped with organized storage systems such as shelves, pallets, and/or racking, along with tools like forklifts and conveyor belts to efficiently manage inventory. A warehouse can take many forms. It may be a distribution centre where products are sorted and shipped directly to customers, or a storage facility that holds stock for manufacturers or retailers. Some warehouses focus on cold storage for perishable goods, while others manage bulk items or hazardous materials. No matter the specific function, the purpose of a warehouse is to ensure that goods are stored safely and efficiently, ready for timely distribution. These are all examples of what a warehouse could be but does not limit it to the examples.

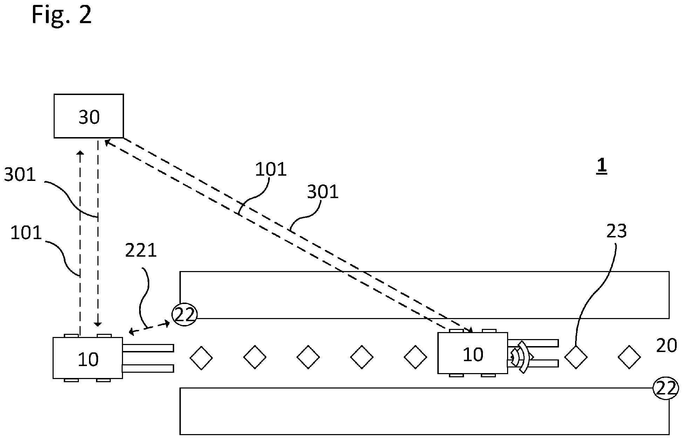

Figure 2 illustrates a wireless server unit 30 in a warehouse 1 where the wireless server unit (30) is configured to communicate with at least two material handling vehicles 10. The figure 2 shows one vehicle 10 in an aisle and another vehicle 10 on its way of to enter the same aisle. The vehicle signal 101, in both vehicles, may include an aisle ID 221 and/or a material handling vehicle position data 231. The aisle ID 221 is an indication data on whether the aisle 20 is occupied or free. The information is read or collected from an aisle access unit 22 in connection to the entrance of the aisle. The aisle access unit could be situated in other locations then showed in the figure, being locations that are suitable for its use. The material handling vehicle position data 231 provides information on the vehicle's location within the aisle 20. This data can be collected by the vehicle using an aisle position means 23. This means 23 could be a navigation system that operates inside the aisle. Alternatively, the vehicle position data 231 may be obtained through a means 23 of tagging system installed within the aisle 20, where specific location tags communicate their positions to the wireless server unit 30. Additionally, reflective markers within the aisle could be read by the vehicle to determine its position. Another means 23 for determining the vehicle's 10 precise location is to track its movement within the aisle by measuring the distance travelled, based on wheel rotation, from the aisle entrance.

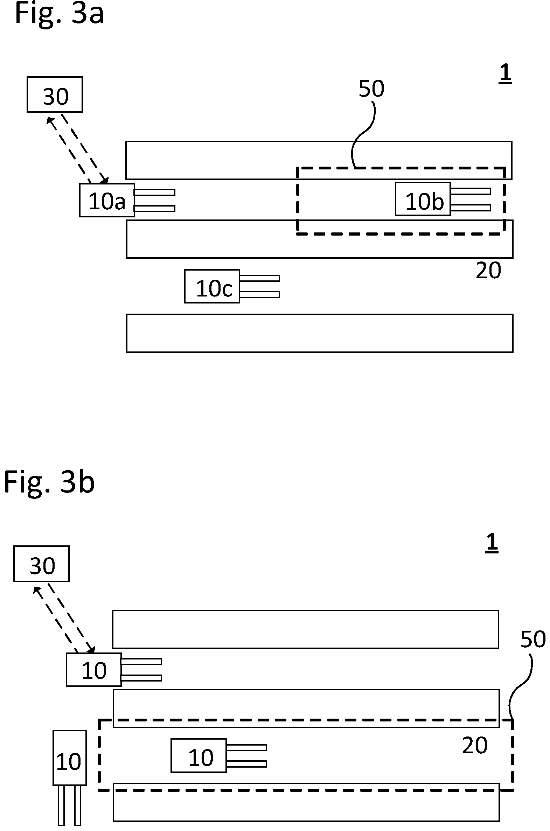

Figure 3 a-b illustrates a wireless server unit 30 in a warehouse 1 where it has been configured to establish stop zones 50. The stop zone 50 are a designated area within the aisle 20 where the vehicle signal 101 prohibits a vehicle 10 from entering an aisle unless conditional access is permitted.

Figure 3a shows a warehouse 1 with two aisles 20 between warehouse shelfs where three different material handling vehicles 10 are moving inside of the warehouse, communicating via the wireless server unit 30. Vehicle 10a approaches the first aisle, which is already occupied by another vehicle, 10b. Upon entering the aisle, vehicle 10b transmits the aisle ID 221 to the wireless server unit 30, along with its position data 321 while inside the aisle. This allows the server unit 30 to continuously monitor the exact location of vehicle 10b within the aisle 20. When vehicle 10a reaches the occupied aisle, it communicates with the server unit 30 through the aisle access unit 22 to determine whether it is permitted to enter. Given that a designated stop zone 50 covers only part of the aisle, the server unit 30 can grant vehicle 10a restricted access to enter the aisle even while vehicle 10b is still inside. The server unit communicates this restricted access by specifying that vehicle 10a must stay within the clear area outside the stop zone 50, which encompasses the other half of the aisle.

The stop zone can be configured in various ways depending on the scenario. In some configurations, the stop zone 50 is activated for the whole aisle whenever the aisle 20 is occupied to prevent additional vehicles from entering. In other cases, the stop zone may adjust based on the position of a vehicle 10, creating a buffer zone around it to maintain safe distances between vehicles.

Figure 3b presents a scenario similar to that shown in Figure 3a. However, in this illustration the entire second aisle 20 has been designated as a stop zone 50, effectively prohibiting any additional vehicles from entering the aisle once it is occupied. This configuration could be employed in situations where the presence of multiple vehicles in the same aisle could lead to congestion or pose safety risks.

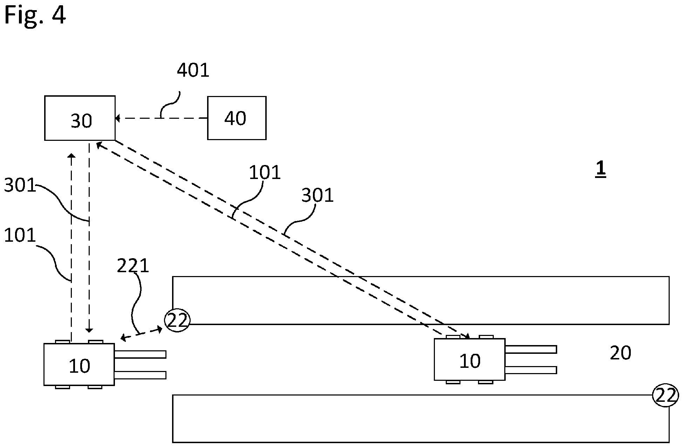

Figure 4 shows the wireless server unit 30 in warehouse 1, where the server unit 30 is further connected to an order management system 40. The order management system 40 is a software solution designed to coordinate and optimize the processing and fulfilment of orders within the warehouse. It manages inventory levels, tracks the movement and availability of material handling vehicles, and ensures the efficient picking, packing, and shipping of goods. The order management system 40 provides the wireless server unit 30 with order management data 401, which includes information about the real-time positions and tasks of the material handling vehicles 10 within the warehouse 1. This order management data 401 is integrated into the aisle status data 301 to enhance the overall functionality of the system. By incorporating order management data 401, the wireless server unit 30 can make more informed decisions about granting or restricting access to aisles based on current order fulfilment needs, vehicle locations, and task priorities.

For example, if the order management data 401 indicates that a vehicle needs to take a specific route to pick goods from various locations within an aisle, the wireless server unit 30 can use this information to optimize traffic flow within the warehouse. Knowing that the vehicle 10 will follow a particular path, the server unit can proactively direct another vehicle 10 to take an alternative route, start picking items from a different shelf, or begin working on another part of its picking list. This coordination prevents congestion and reduces the risk of queues or collisions, ensuring a smoother and more efficient operation.

The wireless server unit can be further be refined with the functions in managing aisle access and vehicle coordination within the warehouse. The aisle status data 301 generated by the wireless server unit 30 could be influenced by a combination of the vehicle signal 101, which includes information about the position and status of the material handling vehicles 10, and the order management data 401. This integration allows the wireless server unit 30 to consider both the current location and movement of the vehicles as well as the requirements and priorities set by the order management system 40.

Configuration of the stop zone 50 within the aisles is conditional on the order management data 401. This means that the wireless server unit 30 can dynamically adjust the stop zones based on the information provided by the order management system, such as the priority of specific picking tasks, the required paths for vehicles to complete those tasks, or anticipated traffic within the aisles.

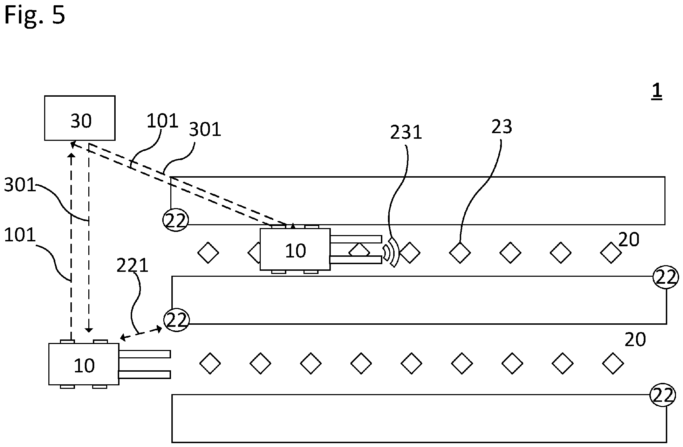

Figure 5 illustrates a wireless server unit 30 in a warehouse 1. The figure shows two vehicles 10 operating inside of the warehouse 1 with two aisles 20. One vehicle is communicating with the aisle access unit 22 of the second aisle and transmitting the aisle ID 223 to the wireless server unit 30. The other vehicle, situated in the first aisle 20, communicates with the server unit 30 via the vehicle position data 231 obtained by the aisle position means 23. In figure 5 these means 23 are illustrated as a tag-system that are scanned by the vehicle inside of the aisle 20.

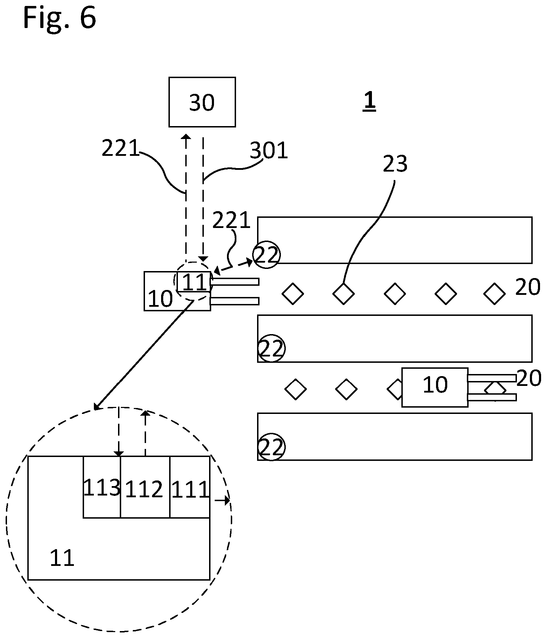

Figure 6 illustrates a material handling vehicle 10 operating in a warehouse 1, along with a wireless server unit 30. The material handling vehicle 10 in figure 6 includes a position controller 11 configured to communicate with the wireless server unit 30 and detect objects in its surroundings. The position controller 11 has three main activity means. The first is a detection means 111, configured to detect the aisle access unit 22. The aisle access unit 22, which can be positioned at the entrance of an aisle, but is not limited to that placement, comprises the aisle ID 221 of that specific aisle. The aisle ID is a signal that the vehicle 10 can detect.

In addition to detecting the aisle access unit 22, the detection means 111 is also configured to detect an aisle position means 23 situated inside the aisle 20. The aisle position means 23 provides specific location information to the material handling vehicle 10 about its position within the aisle 20. Once detected, this position information is transmitted to the wireless server unit 30 via the transmitting means 112. This transmitting means 112 is designed to wirelessly transmit both the aisle ID 221 from the material handling vehicle 10 and the vehicle's specific position within the aisle 20 to the wireless server unit 30.

The third activity means is a receiving means 113, which is configured to receive the aisle status data 301 from the wireless server unit 30. The aisle status data 301 indicates whether access to the aisle 20 is granted or declined. Additionally, the aisle status data 301 can provide further instructions, such as directing the vehicle 10 to take an alternate route or notifying it of partial occupancy within an aisle.

Furthermore, the material handling vehicle 10 can receive a vehicle signal 101 from the wireless server unit 30, which provides details about the location of a stop zone 50. Based on this vehicle signal, the aisle status, the vehicle's position within the aisle 20, and order management data 401, the position controller 11 can determine whether the vehicle should proceed, adjust its route, or stop. The position controller 11 uses this information to manage the further movement of the material handling vehicle 10, ensuring that it operates efficiently within the warehouse 1, avoiding congestion and collisions, and aligning with warehouse operational priorities.

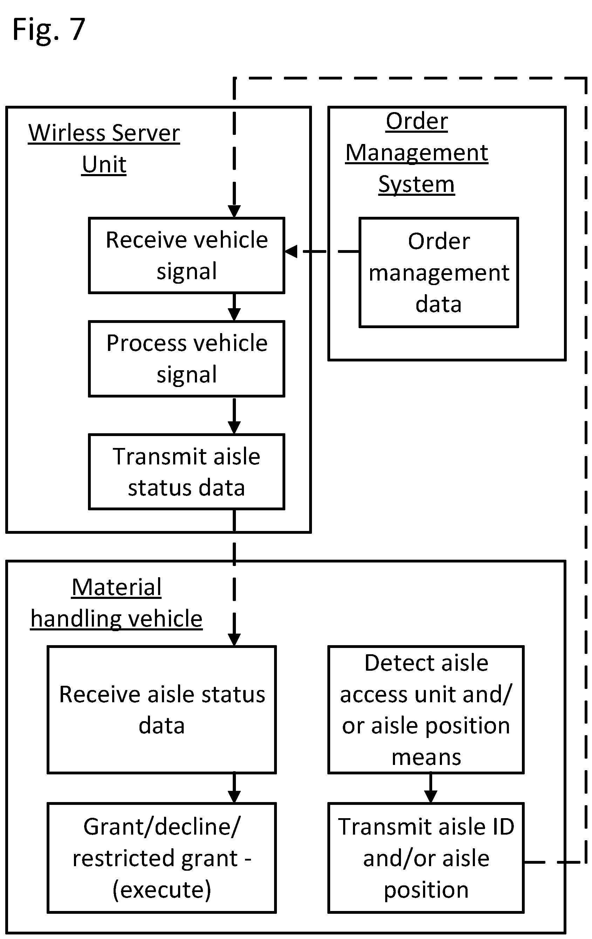

Figure 7 illustrates a flowchart depicting how the wireless server unit 30 and the material handling vehicles 10 operate within a warehouse 1 using the remote aisle access system. In this example, a material handling vehicle 10 moves through an aisle 20 in the warehouse. As it travels, the vehicle 10 detects an aisle position means 23 using the detection means 111 of its position controller 11 and transmits a vehicle signal 101 to the wireless server unit 30, indicating the precise location of the vehicle within the aisle.

The wireless server unit 30 processes this vehicle signal 101 along with additional data, which may include vehicle signals 101 from other vehicles in the system and/or order management data 401 from the order management system 40. After processing this information, the server unit 30 generates and transmits aisle status data 301 to the vehicles. This aisle status data 301 is used to manage access to the aisles, determining whether to grant, deny, or partially grant access to another vehicle 10 that needs entry to the same aisle currently occupied by the vehicle in this example, ensuring smooth and efficient traffic flow within the warehouse.

The person skilled in the art realizes that the present disclosure is not limited to the preferred embodiments described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

## Claims

1. A wireless server unit (30) for use in a warehouse (1), the wireless server unit configured to;
- receive a vehicle signal (101) from a material handling vehicle (10), said vehicle signal indicating a current or a desired position of the vehicle relative to at least one aisle (20),
- process the vehicle signal (101) to generate an aisle status data (301) based on the vehicle signal (101),
- transmit the aisle status data (301) to the at least one material handling vehicle (10),
wherein the aisle status data (301) indicate whether the material handling vehicle is granted or declined access to enter the aisle (20).

2. The wireless server unit (30), according to claim 1,
wherein the aisle status data (301) further indicate a restricted grant of the aisle access to the aisle (20) dependent on the vehicle signal (101).

3. The wireless server unit (30), according to claim 1 or 2,
wherein the wireless server unit (30) is configured to communicate with at least two material handling vehicles (10), and wherein the vehicle signal (101) includes an aisle ID (221) and/or a material handling vehicle position data (231),
- said aisle ID (221) is an indication data on whether the aisle (20) is occupied or free, and
- said material handling vehicle position data (231) is an indication data on where the material handling vehicle is positioned inside of the aisle (20).

4. The wireless server unit (30) according to any of the preceding claims,
wherein the wireless server unit (30) is configured to establish a stop zone (50) in at least one aisle (20), the stop zone (50) being a designated area within the aisle (20) where the vehicle signal (101) prohibits vehicle (10) entry unless conditional access is permitted.

5. The wireless server unit (30) according to claim 4,
wherein the stop zone (50) is activated when the aisle (20) is occupied.

6. The wireless server unit (30) according to claim 4 or 5,
wherein the stop zone (50) is activated a predetermined distance around the vehicle (10), preferably the predetermined distance is arranged to be one to two total lengths of the vehicle (10), preferably the predetermined distance is defined as a circle around the vehicle centre.

7. The wireless server unit (30), according to any of the preceding claims,
wherein the wireless server unit (30) is further arranged to access an order management system (40) comprising order management data (401) related to the position of the at least two material handling vehicles (10), and to include said order management data (401) in the aisle status data (301).

8. The wireless server unit (30), according to claim 7,
wherein the aisle status data (301) is dependent on a combination of the vehicle signal (101) and/or the order management data (401).

9. The wireless server unit (30) according to claim 7 or 8,
wherein the stop zone (50) is conditional on the information from the order management data (401).

10. A material handling vehicle (10) for use in a warehouse (1), wherein the material handling vehicle comprising;
a position controller (11) comprising;
- a detection means (111) configured to detect an aisle access unit (22) comprising the aisle ID (221),
- a transmitting means (112) configured to wireless transmit the aisle ID (221) to a wireless server unit (30),
- a receiving means (113) configured to receive the aisle status data (301) from the wireless server unit (30), the aisle status data indicating whether access to an aisle (20) is granted or declined,
wherein the position controller (11) is configured to control the movement of the material handling vehicle in dependence of the aisle status data (301).

11. The material handling vehicle (10) according to claim 10,
wherein an aisle position means (23) situated inside of the aisle (20) indicating to the material handling vehicle (10) a specific position inside of the aisle (22), the aisle position means (23) is detected with the detection means (111), and transmitted with the transmitting means (112), to the wireless server unit (30).

12. The material handling vehicle (10) according to claim 10 or 11,
wherein the material handling vehicle detection means (111) is further configured to detect the aisle position means (23) inside the aisle (20) to determine the position of the vehicle inside of the aisle (20) and,
wherein the transmitting means (112) is further configured to wireless transmit the vehicle position to the wireless server (30).

13. The material handling vehicle (10) according to claim 10-12,
wherein the material handling vehicle (10) receives a vehicle signal (101) from the wireless server unit (30) indicating a stop zone (50) and limit the vehicle (10) based on the aisle status and vehicle position in the aisle (20) and order system data (401).

14. A remote aisle access system for controlling access to material handling vehicles in a warehouse (1), comprising a wireless server unit (30) according to claim 1 to 9, at least one material handling vehicle (10) according to any one of the claims 10 to 13, and at least one aisle (20) arranged for wireless communication.
